# FASCICULE DE BREVET EUROPEEN

(11) **EP 1 456 057 B1**
(45) Date de publication et mention de la délivrance du brevet: **23.07.2008**
(21) Numéro de dépôt: 02797681.0
(22) Date de dépôt: 03.09.2002
(51) Int. Cl.: B60P 3/03

(54) **PROCEDE POUR LE TRANSPORT SECURISE DE FONDS ET VALEURS**
VERFAHREN ZUR SICHERUNG DES TRANSPORTS VON GELD UND WERTGEGENSTÄNDEN
METHOD FOR SECURE TRANSPORT OF MONEY AND VALUABLES

(30) Priorité: 06.09.2001 FR 0111512
(43) Date de publication de la demande: 15.09.2004
(73) Titulaire: Demagny, Gérard, 78160 Marly le Roi (FR)
(72) Inventeur: Demagny, Gérard, 78160 Marly le Roi (FR)
(74) Mandataire: de Saint-Palais, Arnaud Marie
(86) Numéro de dépôt international: PCT/FR2002/002996
(87) Numéro de publication internationale: WO 2003/020551

(56) Documents cités:
- DE-A- 2 328 811
- US-A- 4 192 216
- US-A- 4 239 447
- US-A- 4 729 444

## Description

La présente invention concerne un procédé pour le transport-distribution-collecte sécurisé de fonds et de valeurs'(désignées F&V) pendant toute la durée de leur transfert entre un point d'expédition et un point de réception, procédé qui permet d'une part, l'inaccessibilité intégrale à ces fonds et valeurs que ce soit par les convoyeurs affectés au transport ou par des agresseurs cherchant à s'en saisir illégalement et d'autre part, la destruction à distance de ces fonds et valeurs en cas de détournement illégal

Par le brevet US 4 729 444, on a déjà proposé un procédé pour le transport, la distribution et la collecte sécurisé de fonds et valeurs faisant intervenir un robot mobile sécurisé et embarqué dans un véhicule blindé. Ce véhicule qui est piloté par une personne au dehors du robot permet de déposer et de récupérer des objets de valeurs.

Le brevet US 4 239 447 décrit quant à lui un chariot satellite blindé transporté par un véhicule blindé et pouvant être piloté par un conducteur armé depuis l'intérieur dudit chariot.

L'intervention a plus particulièrement pour but d'améliorer la chaîne de sécurité de ce type de transport.

A cet effet, elle propose un procédé pour le transport, la distribution et la collecte sécurisés de fonds et de valeurs entre :
- d'une part une installation fixe de départ dans laquelle les fonds et valeurs sont disposés dans des contenants sécurisés par un système de neutralisation et/ou de destruction, et
- d'autre part une pluralité d'installations fixes de destination, destinées à recevoir des fonds et valeurs disposés dans des contenants sécurisés, comportant chacune des moyens de stockage sécurisés,
- ce procédé faisant intervenir une installation de transport comprenant une camionnette de transport pilotée par au moins un convoyeur, au moins un système de stockage mobile blindé ou non embarqué à bord de ladite camionnette et au moins un robot mobile également embarqué à bord de ladite camionnette, ledit système de stockage mobile comprenant des moyens de transfert automatique permettant son approvisionnement en contenants sécurisés et le chargement sélectif dudit au moins robot mobile en contenants sécurisés.

Selon l'invention, ce procédé est caractérisé en ce qu'il comprend les étapes suivantes :
- le chargement sélectif du système de stockage mobile, dans l'installation fixe de départ, avec des contenants sécurisés respectivement affectés aux susdites installations fixes de destination,
- le chargement du système de stockage mobile et du robot mobile à l'intérieur de la camionnette de transport,
et pour chacune des installations fixes de destination,
- le déplacement de l'installation de transport jusqu'à cette installation fixe de destination,
- la sélection du ou des contenants sécurisés affectés à ladite installation fixe de destination et le transfert du ou des contenants sélectionnés dans le robot mobile, cette sélection et ce transfert pouvant être effectués durant le déplacement de l'installation de transport selon un programme préétabli,
- lorsque l'installation de transport se trouve au voisinage de l'installation fixe de destination, le déplacement du robot mobile jusqu'aux moyens de stockage sécurisés de ladite installation fixe de destination,
- le déchargement du ou des contenants sécurisés présents dans le robot mobile, dans les moyens de stockage sécurisés de ladite installation fixe de destination,
- le retour du robot mobile dans l'installation de transport et le déchargement éventuel, dans le système de stockage mobile, de contenants récupérés des moyens de stockage de ladite installation fixe de destination,
- le déplacement de l'installation de transport vers une nouvelle installation fixe de destination ou vers l'installation fixe de départ.

De manière avantageuse, les fonds et valeurs sont dans des contenants sécurisés, gérés et contrôlés par des dispositifs adaptés, en sorte que à tout moment les fonds et valeurs ne sont ni manipulables directement ou indirectement, ni repérables ou détectables à la vue, et toujours protégés dans leur contenant respectif.

En cas d'agression, à tout moment des transferts et du transport des fonds et valeurs, les convoyeurs peuvent décider de leur neutralisation et/ou de leur destruction, ou à distance.

Le robot mobile est conçu pour s'affranchir des contraintes environnementales notamment de nature des sols ; il permet la liaison en toute sécurité des F&V de la camionnette de transport à l'installation fixe de destination sans exposer les convoyeurs aux agressions, ceux-ci restant en sécurité dans leur cabine.

Selon un développement particulièrement intéressant, le transfert des F&V de l'installation fixe de départ à l'installation de transport et vice-versa s'effectue dans un système de stockage blindé mobile, pouvant renfermer plusieurs contenants, le chargement des contenants ne pouvant s'effectuer qu'en site clos et protégé.
Le transfert des F&V de l'installation de transport vers l'installation fixe de destination s'effectue par prélèvement d'au moins un contenant placé dans le système de stockage blindé mobile embarqué alors dans la camionnette, le(s) contenant(s) prélevés étant placés dans un robot mobile et transporté(s) par ce robot mobile vers un site clos et protégé de destination et vice-versa.
Le site de destination peut être équipé d'un système de stockage blindé fixe, identique dans le principe à celui de l'installation de départ, ou d'un système simplifié. Le robot mobile transfère ou prélève le dit au moins un contenant vers ou dans ce système de stockage.
Il en découle le rôle précis et encadré de conduite et de télécommande dédié aux convoyeurs, suivant des programmes définis et gérés par les organismes de F&V.

Les dessins annexés illustrent un mode détaillé de réalisation de l'invention :

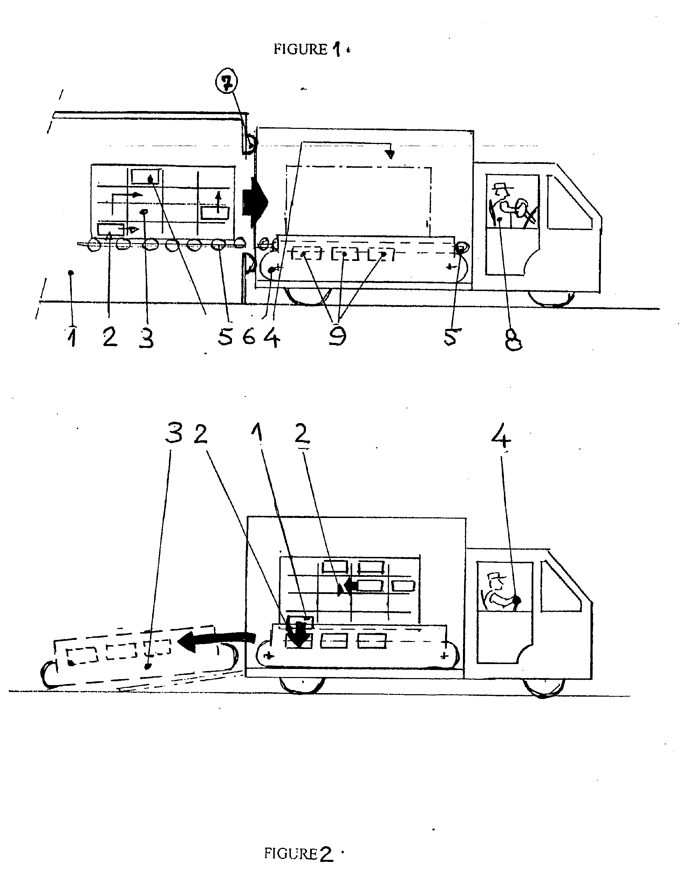

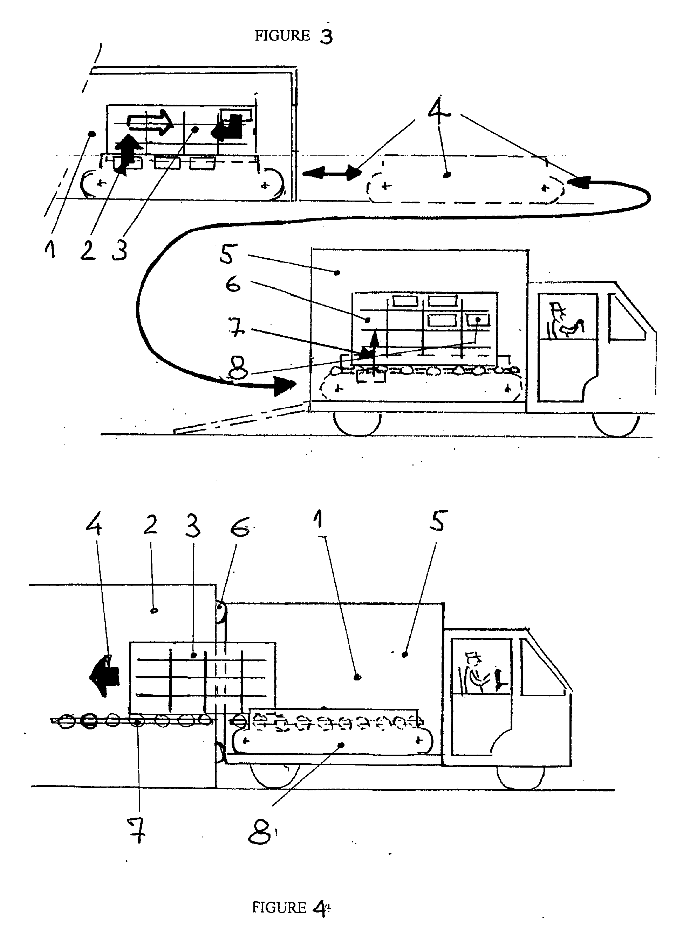

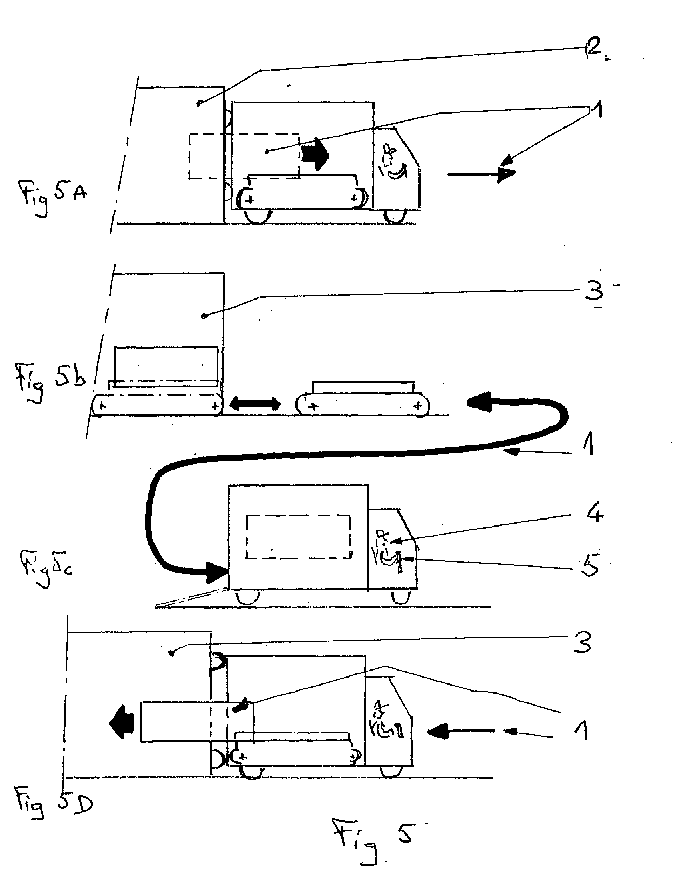

Les figures 1 à 4 représentent respectivement les procédés de :
   Transfert (A) des fonds et valeurs de l'installation fixe de départ à l'installation de transport. Transfert (B) des fonds et valeurs de l'installation de transport dans le robot mobile et transport des fonds dans le robot mobile. Transfert (C) des fonds et valeurs du robot mobile à l'installation fixe de destination et vice-versa. Transfert (D) des fonds et valeurs de l'installation de transport à l'installation de départ.
   Transfert (A) des fonds et valeurs de l'installation fixe de départ (1) à l'installation de transport :
      En site clos et protégé, les opérateurs effectuent le chargement de contenants (2) préalablement remplis de F&V, verrouillés par un système codé et géré par informatique. Ce chargement s'effectue dans des systèmes de stockage blindé mobiles (3) comportant plusieurs places où chaque contenant sera affecté, géré informatiquement, soumis à un système de neutralisation et/ ou de destruction et solidarisé par verrous mécaniques à la structure blindée.
      Un de ces systèmes de stockage blindé mobile (il peut y en avoir plusieurs en préparation et/ ou attente) est ensuite lui-même chargé dans une camionnette de transport (4) sur un chemin de rail mécanisé.(5). Un emplacement aménagé à la partie inférieure du système de stockage blindé mobile, permettra de recevoir un robot mobile (6) en attente dans la camionnette de transport, comportant lui-même un ou plusieurs emplacements (9) pour y charger ultérieurement les contenants sécurisés.
      Le transfert des fonds et valeurs de l'installation fixe à l'installation de transport peut ainsi s'effectuer sans intervention humaine, camionnette de transport en contact avec un sas de chargement, (7) le's convoyeurs assis en cabine (8) pour télécommander l'opération. En cas d'agression, les convoyeurs peuvent déclencher le système de neutralisation et/ ou de destruction des F&V. En cas de choc anormal, le système de neutralisation et/ ou de destruction sera automatiquement déclenché.
   Transfert (B) des fonds et valeurs de l'installation de transport dans le robot mobile et transport des fonds dans le robot mobile:
      Arrivé à proximité de l'installation fixe de destination, un dispositif de distribution et d'élévateurs (1) intégrés au système de stockage blindé, télécommandé par programme informatique de gestion et de contrôle et actionné par les convoyeurs exécutera le chargement automatique du robot mobile en contenant(s) sécurisé(s)(2). Ensuite le robot quitte la camionnette,(3) achemine ses contenants soit par télécommande, soit par autoguidage par des plots insérés dans le sol, de l'installation de transport vers l'installation fixe de destination. Ces deux installations peuvent être distantes de plusieurs dizaines de mètres.
      Les contenants sont sécurisés de la même manière dans le robot mobile que dans l'unité de stockage mobile ce qui entraîne la même protection des F&V : en cas d'agression les convoyeurs peuvent déclencher le système de neutralisation et/ ou de destruction (4) des F&V. En cas de choc anormal, le système de neutralisation et/ ou de destruction sera automatiquement déclenché.
      Le portage de fonds et valeurs est traditionnellement effectué par du personnel qui porte les valeurs à pieds à partir d'un véhicule blindé pour les remettre en main propre à un membre du personnel de l'organisme receveur ou dans un guichet « sas » mais sans éliminer les risques d'agressions souvent mortelles des opérateurs, du vol des fonds et valeurs transportées et de leur utilisation ultérieure même partielle.
      Le procédé selon l'invention permet de remédier à tous ces inconvénients. Il permet en effet de transporter les contenants de l'installation de transport jusqu'à l'installation de réception sans mettre en péril les convoyeurs qui restent protégés à l'intérieur de leur cabine sans avoir à porter physiquement ces fonds et valeurs et à s'exposer aux agressions extérieures.
      Par ailleurs, le vol du robot téléguidé et de son contenu sécurisé est pratiquement rendu impossible en raison du poids de l'ensemble.
      De plus, en cas de détournement par action extérieure illégale, la neutralisation et/ ou la destruction des F&V par le dispositif sécurisé télécommandé à distance par les convoyeurs rendra la tentative de vol sans effet, les valeurs étant inutilisables.
   Transfert (C) des fonds et valeurs du robot mobile à l'installation fixe de destination (1) et vice-versa:
      Le déchargement du robot mobile (2) s'effectue dans un système de stockage blindé fixe (3) identique dans le principe à celui de l'installation fixe de départ mais pouvant comporter un nombre de places moins important, et où chaque contenant qui y sera affecté, pourra être géré informatiquement, branché à un système de neutralisation et/ ou de destruction et solidarisé par verrous mécaniques à la structure blindée ou non.
      Le déchargement et/ ou la collecte effectué(s), le robot mobile chargé ou non retourne par le même principe de téléguidage ou de télécommande actionnée par les convoyeurs vers la camionnette de transport (5) pour se positionner sous le système de stockage blindé mobile (6) et y recharger si prévu le(s) contenant(s) collecté(s) (7). En effet par le même procédé, le robot mobile peut se charger de contenants provenant du site de réception à retourner vers le site initial de départ ou autre lieu. (principe de distribution et de collecte). Une nouvelle livraison vers un autre site récepteur équipé du même dispositif de réception et de déchargement est alors possible et ainsi de suite jusqu'à épuisement des contenants à distribuer et/ ou à collecter.(8)
   Transfert (D) des fonds et valeurs de l'installation de transport (1) à l'installation de départ (2)
      A l'issue de la distribution et de la collecte des F&V, le système de stockage blindé mobile (3) vide ou plein de contenants sécurisés collectés est déchargé (4) de la camionnette (5) en contact avec le sas de sécurité (6) de l'installation fixe de départ sur un chemin de rail comme décrit au premier transfert.
      Le robot (8) reste dans la camionnette (5) qui, après fermeture du sas de sécurité, pourra vaquer au transport-distribution- collecte d'autres sites équipés de dispositifs similaires.
      Le système de stockage blindé mobile peut alors être traité pour une autre campagne de transport- distribution- collecte, par les opérateurs de l'organisme de F&V, en site clos et protégé(2).

La présente invention pour le transport- distribution- collecte sécurisé de fonds et de valeurs comprend un dispositif minimum composé de :
- Au moins une camionnette adaptée pour transporter un système de stockage mobile de contenants sécurisés et un robot mobile capable de recevoir au moins un de ces contenants.
- Au moins un dispositif de stockage blindé mobile pouvant passer d'un site clos et protégé à la camionnette à et vice-versa, agencé de manière à pouvoir recevoir plusieurs contenants, équipé d'un dispositif de distribution de contenants par rampes et élévateurs, d'un dispositif de neutralisation et /ou destruction des F&V télécommandé à distance, des mécanismes de verrouillages des contenants et des mécanismes électromécaniques nécessaires à l'exécution des programmes de chargement et de déchargement des contenants, l'ensemble commandé à distance selon un programme informatique séquentiel embarqué préétabli par les opérateurs des organismes de F&V et actionné par les convoyeurs.
- Au moins un robot mobile, capable de recevoir au moins un contenant, de se déplacer sur différents types de revêtement de sols et de franchir des obstacles tels que trottoirs, marches d'escaliers et rampes d'accès ou autres, équipé d'un dispositif de chargement/ déchargement de(s) contenants(s), d'un dispositif de neutralisation et /ou destruction des F&V des mécanismes de verrouillages des contenants et des mécanismes de électromécaniques nécessaires à l'exécution des programmes de chargement et de déchargement de(s) contenant(s), l'ensemble télé commandé à distance selon un programme séquentiel embarqué préétabli par les opérateurs des organismes de F&V et actionné par les convoyeurs.
- Au moins un site de départ clos et protégé pour effectuer le chargement des contenants dans le(s) système(s) de stockage blindé(s) mobile(s) avec sas de fermeture et rail mécanisé pour le transfert de ce dernier.
- Au moins un site de réception clos et protégé, équipé ou non d'un système de stockage fixe de contenant(s) identique dans le principe à celui de l'installation de départ mais pouvant comporter un nombre de places moins important, et où chaque contenant qui y sera affecté, pourra être géré informatiquement, branché à un système de neutralisation et/ ou de destruction et solidarisé par verrous mécaniques à la structure blindée ou non. En l'absence de ce système on peut imaginer un prélèvement manuel directement effectué par les opérateurs des organismes de F&V sur le robot mobile dés lors qu'ils sont dans un site clos et protégé.
   La présente invention est plus particulièrement destinée aux installations pour le transport- distribution- collecte sécurisé de fonds et de valeurs comprenant plusieurs installations de départ, de réception et de collecte voire même de transit.
   Sa vocation réside, en plus de la sécurité qu'elle apporte, en la possibilité de préparer des systèmes de stockage blindés en les chargeant de contenants dans des sites clos et protégés des agressions, de programmer des tournées avec des plans de distribution collectes optimisés en terme de trajet et de sécurité, de croiser des campagnes de distribution collecte d'organismes divers de F&V tels que banques centrales, grandes surfaces de distribution, imprimeries Nationales et Européennes de valeurs monétaires, grands organismes nationaux et privés mais également PME/PMI, moyennes surfaces, agences bancaires.

La présente invention permet de mixer les dispositifs, plus ou moins sophistiqués comme décrits précédemment.
De même, le système de gestion informatisé pourra soit être centralisé pour certains organismes de F&V soit partiellement ou totalement répartis pour d'autres, les programmes séquentiels étant embarqués à bord de la camionnette de transport ainsi que l'électronique de gestion.

## Revendications

1. Procédé pour le transport, la distribution et la collecte sécurisés de fonds et de valeurs entre :
- d'une part une installation fixe de départ (1) dans laquelle les fonds et valeurs sont disposés dans des contenants (2) sécurisés par un système de neutralisation et/ou de destruction, et
- d'autre part une pluralité d'installations fixes de destination, destinées à recevoir des fonds et valeurs disposés dans des contenants (2) sécurisés, comportant chacune des moyens de stockage sécurisés,
- ce procédé faisant intervenir une installation de transport (4) comprenant une camionnette de transport pilotée par au moins un convoyeur, au moins un système de stockage mobile blindé (3) ou non embarqué à bord de ladite camionnette (4) et au moins un robot mobile (6) également embarqué à bord de ladite camionnette, ledit système de stockage mobile (5) comprenant des moyens de transfert automatique permettant son approvisionnement en contenants sécurisés (2) et le chargement sélectif dudit au moins robot mobile (6) en contenants sécurisés (2),
**caractérisé en ce qu'**il comprend les étapes suivantes :
- le chargement sélectif du système de stockage mobile (3), dans l'installation fixe de départ (1), avec des contenants sécurisés respectivement affectés aux susdites installations fixes de destination,
- le chargement du système de stockage mobile (3) et du robot mobile (6) à l'intérieur de la camionnette de transport (4),
et pour chacune des installations fixes de destination,
- le déplacement de l'installation de transport jusqu'à cette installation fixe de destination,
- la sélection du ou des contenants sécurisés (2) affectés à ladite installation fixe de destination et le transfert du ou des contenants (2) sélectionnés dans le robot mobile (6), cette sélection et ce transfert pouvant être effectués durant le déplacement de l'installation de transport (4) selon un programme préétabli,
- lorsque l'installation de transport (4) se trouve au voisinage de l'installation fixe de destination, le déplacement du robot mobile (6) jusqu'aux moyens de stockage sécurisés de ladite installation fixe de destination,
- le déchargement du ou des contenants sécurisés (2) présents dans le robot mobile (6), dans les moyens de stockage sécurisés de ladite installation fixe de destination,
- le retour du robot mobile (6) dans l'installation de transport (4) et le déchargement éventuel, dans le système de stockage mobile (3), de contenants récupérés des moyens de stockage de ladite installation fixe de destination,
- le déplacement de l'installation de transport (4) vers une nouvelle installation fixe de destination ou vers l'installation fixe de départ.

2. Procédé selon la revendication 1,
**caractérisé en ce que** au moins un convoyeur peut déclencher la neutralisation et/ou la destruction des contenants sécurisés (2) à tout moment et à distance.

3. Procédé selon la revendication 1,
**caractérisé en ce qu'**en cas de choc subit par un quelconque des éléments de l'installation de transport, la neutralisation et/ou la destruction des contenants sécurisés (2) sont effectuées automatiquement.

4. Procédé selon la revendication 1,
**caractérisé en ce que** le déplacement du robot mobile (6), hors de l'installation de transport (4) est télécommandé par le convoyeur situé dans la camionnette de transport (4).

5. Procédé selon la revendication 1,
**caractérisé en ce que** le déplacement du robot mobile (6), hors de l'installation de transport (4) est effectué d'une manière automatique.

6. Procédé selon la revendication 1,
**caractérisé en ce que** le chargement sélectif du système de stockage mobile dans l'installation fixe de départ (1) avec des contenants sécurisés (2), est effectué soit manuellement soit automatiquement.

7. Procédé selon la revendication 1,
**caractérisé en ce que** l'affectation des contenants sécurisés (2) aux installations fixes de destination est effectué soit manuellement soit automatiquement.

8. Procédé selon la revendication 1,
**caractérisé en ce que** le transfert des contenants sécurisés (2) dans le robot mobile (6) est effectué soit manuellement soit automatiquement.

9. Procédé selon la revendication 1,
**caractérisé en ce que** le déchargement des contenants sécurisés (2) du robot mobile (6) dans les moyens de stockage sécurisés (3) des installations fixes de destination est effectué soit manuellement soit automatiquement.

10. Procédé selon la revendication I,
**caractérisé en ce que** la récupération par le robot mobile (6) des contenants sécurisés (2) des moyens de stockage (3) sécurisés des installations fixes de destination est effectué soit manuellement soit automatiquement.

11. Procédé selon la revendication 1,
**caractérisé en ce que** les différentes opérations de déplacement, de chargement, de déchargement, d'affectation, de transfert et de stockage, sont gérées par un système informatique centralisé ou décentralisé.

## Claims

1. Method for the secure transport, distribution and collection of money and valuables between:
- on one hand a fixed departure installation (1) in which the money and valuables are arranged in containers (2) secured by a neutralization and/or destruction system, and
- on the other hand a plurality of fixed destination installations, designed to receive money and valuables arranged in secured containers (2), each comprising secured storage means,
- this method calling upon a transport installation (4) comprising a transport van driven by at least one transporter, at least one armored mobile storage system (3) or not loaded onboard said van (4) and at least one mobile robot (6) also loaded onboard said van, said mobile storage system (5) comprising automatic transfer means enabling its provisioning in secured containers (2) and the selective loading of said at least one mobile robot (6) in secured containers (2),
**characterized in that** it comprises the following steps:
- the selective loading of the mobile storage system (3), in the fixed departure installation (1), with secured containers respectively allocated to the abovementioned fixed destination installations,
- loading of the mobile storage system (3) and the mobile robot (6) inside the transport van (4),
and for each of the fixed destination installations,
- movement of the transport installation to this fixed destination installation,
- selection of the secured container(s) (2) allocated to said fixed destination installation and the transfer of the selected container(s) (2) in the mobile robot (6), this selection and this transfer being able to be done during the movement of the transport installation (4) according to a pre-established program,
- when the transport installation (4) is in the vicinity of the fixed destination installation, the movement of the mobile robot (6) to the secured storage means of said fixed destination installation,
- unloading of the secured container(s) (2) present in the mobile robot (6), in the secured storage means of said fixed destination installation,
- the return of the mobile robot (6) in the transport installation (4) and possible unloading, in the mobile storage system (3), of the containers recovered from the storage means of said fixed destination installation,
- movement of the transport installation (4) toward a new fixed destination installation or toward the fixed departure installation.

2. Method according to claim 1,
**characterized in that** at least one transporter can trigger the neutralization and/or destruction of the secured containers (2) at any moment and distance.

3. Method according to claim 1,
**characterized in that** in case of shock suffered by any of the elements of the transport installation, the neutralization and/or destruction of the secured contents (2) are done automatically.

4. Method according to claim 1,
**characterized in that** the movement of the mobile robot (6), outside the transport installation (4), is remotely controlled by the transporter located in the transport van (4).

5. Method according to claim 1,
**characterized in that** the movement of the mobile robot (6), outside the transport installation (4), is done automatically.

6. Method according to claim 1,
**characterized in that** the selective loading of the mobile storage system in the fixed departure installation (1) with secured containers (2) is done either manually or automatically.

7. Method according to claim 1,
**characterized in that** the allocation of the secured containers (2) to the fixed destination installations is done either manually or automatically.

8. Method according to claim 1,
**characterized in that** the transfer of the secured containers (2) in the mobile robot (6) is done either manually or automatically.

9. Method according to claim 1,
**characterized in that** the unloading of the secured containers (2) from the mobile robot (6) in the secured storage means (3) of the fixed destination installations is done either manually or automatically.

10. Method according to claim 1,
**characterized in that** the recovery by the mobile robot (6) of the secured containers (2) from the secured storage means (3) of the fixed destination installations is done either manually or automatically.

11. Method according to claim 1,
**characterized in that** the various movement, loading, unloading, allocation, transfer and storage operations are managed by a centralized or decentralized computer system.

## Patentansprüche

1. Verfahren zum sicheren Transport und zur sicheren Verteilung und Sammlung von Geldern und Wertgegenständen zwischen:
- einerseits einer festen Absendeeinrichtung (1), in welcher die Gelder und Wertgegenstände in Behältern (2) angeordnet sind, die durch ein Neutralisierungs- und/oder Zerstörungssystem gesichert sind, und
- andererseits einer Mehrzahl von festen Zieleinrichtungen, die dazu bestimmt sind, Gelder und Wertgegenstände zu empfangen, welche in gesicherten Behältern (2) angeordnet sind und von denen jede Mittel zur sicheren Aufbewahrung aufweist,
- wobei dieses Verfahren eine Transporteinrichtung (4) verwendet, die einen von mindestens einem Begleiter gesteuerten Transporter, mindestens ein bewegliches, gepanzertes oder ungepanzertes Lagersystem (3), das sich an Bord des besagten Transporters (4) befindet, und mindestens einen beweglichen Roboter (6) umfasst, der sich ebenso an Bord des besagten Transporters befindet, wobei das besagte bewegliche Lagersystem (5) Mittel zur automatischen Überführung aufweist, die seine Versorgung mit gesicherten Behältern (2) und das selektive Beladen des mindestens einen beweglichen Roboters (6) mit gesicherten Behältern (2) ermöglicht,
**dadurch gekennzeichnet, dass** es die folgenden Schritte umfasst:
- das selektive Beladen des beweglichen Lagersystems (3) in der festen Absendeeinrichtung (1) mit gesicherten Behältern, die jeweils den oben erwähnten festen Zieleinrichtungen zugeordnet sind,
- das Einladen des beweglichen Lagersystems (3) und des beweglichen Roboters (6) in das Innere des Transporters (4),
und für jede der festen Zieleinrichtungen,
- die Bewegung der Transporteinrichtung bis zu dieser festen Zieleinrichtung,
- die Auswahl des gesicherten Behälters oder der gesicherten Behälter (2), die der besagten festen Zieleinrichtung zugeordnet sind, und die Überführung des ausgewählten Behälters oder der ausgewählten Behälter (2) zu dem beweglichen Roboter (6), wobei diese Auswahl und diese Überführung während der Bewegung der Transporteinrichtung (4) nach einem vorgegebenen Programm ausgeführt werden können,
- wenn sich die Transporteinrichtung (4) in der Nähe der festen Zieleinrichtung befindet, die Bewegung des beweglichen Roboters (6) bis zu den Mitteln zur sicheren Aufbewahrung der besagten festen Zieleinrichtung,
- die Entladung des gesicherten Behälters oder der gesicherten Behälter (2), die in dem beweglichen Roboter (6) vorhanden sind, in die Mittel zur sicheren Aufbewahrung der besagten festen Zieleinrichtung,
- die Rückkehr des beweglichen Roboters (6) in die Transporteinrichtung (4) und die eventuelle Entladung von aus den Mitteln zur Aufbewahrung der besagten festen Zieleinrichtung rückgewonnenen Behältern in das bewegliche Lagersystem (3),
- die Bewegung der Transporteinrichtung (4) zu einer neuen festen Zieleinrichtung oder zur festen Absendeeinrichtung.

2. Verfahren nach Anspruch 1, **dadurch gekennzeichnet, dass** mindestens ein Begleiter die Neutralisierung und/oder Zerstörung der gesicherten Behälter (2) in jedem Moment und aus der Entfernung auslösen kann.

3. Verfahren nach Anspruch 1, **dadurch gekennzeichnet, dass** im Falle, dass irgendeines der Elemente der Transporteinrichtung einem Stoß ausgesetzt ist, die Neutralisierung und/oder Zerstörung der gesicherten Behälter (2) automatisch bewirkt werden.

4. Verfahren nach Anspruch 1, **dadurch gekennzeichnet, dass** die Bewegung des beweglichen Roboters (6) aus der Transporteinrichtung (4) heraus durch den im Transporter (4) befindlichen Begleiter ferngesteuert erfolgt.

5. Verfahren nach Anspruch 1, **dadurch gekennzeichnet, dass** die Bewegung des beweglichen Roboters (6) aus der Transporteinrichtung (4) heraus automatisch bewirkt wird.

6. Verfahren nach Anspruch 1, **dadurch gekennzeichnet, dass** die selektive Beladung des beweglichen Lagersystems in der festen Absendeeinrichtung (1) mit gesicherten Behältern (2) manuell oder automatisch bewirkt wird.

7. Verfahren nach Anspruch 1, **dadurch gekennzeichnet, dass** die Zuordnung der gesicherten Behälter (2) zu festen Zieleinrichtungen manuell oder automatisch bewirkt wird.

8. Verfahren nach Anspruch 1, **dadurch gekennzeichnet, dass** die Überführung der gesicherten Behälter (2) in den beweglichen Roboter (6) manuell oder automatisch bewirkt wird.

9. Verfahren nach Anspruch 1, **dadurch gekennzeichnet, dass** die Entladung der gesicherten Behälter (2) aus dem beweglichen Roboter (6) in die Mittel (3) zur gesicherten Aufbewahrung der festen Zieleinrichtung manuell oder automatisch bewirkt wird.

10. Verfahren nach Anspruch 1, **dadurch gekennzeichnet, dass** die Rückgewinnung von gesicherten Behältern (2) aus den Mitteln (3) zur gesicherten Aufbewahrung der festen Zieleinrichtung durch den beweglichen Roboter (6) manuell oder automatisch bewirkt wird.

11. Verfahren nach Anspruch 1, **dadurch gekennzeichnet, dass** die unterschiedlichen Operationen der Bewegung, der Beladung, der Entladung, der Zuordnung, der Überführung und der Lagerung durch ein zentrales oder dezentrales Datenverarbeitungssystem gesteuert werden.
